# EUROPÄISCHE PATENTSCHRIFT

(11) **EP 1 624 770 B1**
(45) Veröffentlichungstag und Bekanntmachung des Hinweises auf die Patenterteilung: **04.07.2007**
(21) Anmeldenummer: 04739194.1
(22) Anmeldetag: 13.05.2004
(51) Int. Cl.: A45D 40/16

(54) **VORRICHTUNG UND VERFAHREN ZUR HERSTELLUNG VON AUS PASTÖSEN MASSEN GEFORMTEN OBJEKTEN UND HERSTELLUNGSFORM**
DEVICE AND METHOD FOR PRODUCING OBJECTS MOLDED FROM PASTE-LIKE MATERIALS, AND PRODUCTION MOLD
DISPOSITIF ET PROCEDE DE PRODUCTION D'OBJETS MOULES EN MATIERE PATEUSE ET MOULE

(30) Priorität: 13.05.2003 DE 10321485
(43) Veröffentlichungstag der Anmeldung: 15.02.2006
(73) Patentinhaber: Weckerle GmbH, 82362 Weilheim (DE)
(72) Erfinder: GILG, Franz, Xaver, 82398 Polling (DE)
(74) Vertreter: Hohgardt, Martin
(86) Internationale Anmeldenummer: PCT/EP2004/005134
(87) Internationale Veröffentlichungsnummer: WO 2004/100705

(56) Entgegenhaltungen:
- EP-A- 0 686 468
- DE-A- 10 136 391
- FR-A- 2 729 278
- US-A1- 2002 086 079

## Beschreibung

Die Erfindung betrifft eine Vorrichtung zur Herstellung von aus pastösen Massen geformten Objekten wie zum Beispiel Lippenstifte.

Eine derartige Vorrichtung wird beispielsweise in der FR 2 729 278 gezeigt. Gemäß dieser Druckschrift sind Silikonformen vorgesehen, die kopfüber frei in dem Träger einer Füllvorrichtung hängen. Die Masse wird im heißen Zustand eingefüllt und erstarrt in der Form. Nach dem Erstarren wird von oben, d.h. am rückseitigen Ende des Lippenstifts ein Körbchen aufgesetzt und ein Vakuum auf die Außenfläche der Silikonform angelegt, wodurch diese sich ausdehnt und den im Inneren gebildeten Lippenstiftkörper freigibt. Anschließend kann der Lippenstift mittels des Körbchens nach oben entnommen werden. Ein Problem bei diesem Verfahren besteht darin, dass die Silikonforrn, insbesondere bei längerer Benutzung, die Formstabilität verliert, was unter anderem daher rührt, dass die Form mit jedem Herstellungsvorgang zum Entnehmen des Lippenstiftes deformiert wird. Auf der anderen Seite bietet genau diese Deformation die Möglichkeit, den erhärteten Lippenstift mit wenig Aufwand aus der Form zu entnehmen.

Es ist daher Aufgabe der Erfindung, eine Vorrichtung zur Herstellung von aus pastösen Massen geformten Objekten zu schaffen, die zum einen eine hohe Formstabilität des Produkts gewährleisten und andererseits eine leichte Entnehmbarkeit des Objektes nach dem Erstarren aus der Form sicherstellen.

Diese Aufgabe wird gelöst durch eine Vorrichtung mit den Merkmalen des Anspruchs 1, eine Herstellungsform nach Anspruch 14 und ein Verfahren nach Anspruch 17. Vorteilhafte Weiterbildungen der Erfindung sind Gegenstand der zugeordneten Unteransprüche.

Erfindungsgemäß wird eine Form vorgesehen, in der ein elastisches Formteil, z.B. aus Silikon, nicht freihängend verwendet wird, sondern das Formteil ist in einer formstabilen Aufnahmeelement angeordnet, die sicherstellt, dass das Formteil zumindest während des Befüllvorgangs nicht deformiert wird. Die Aufnahmeelement hat hierfür einen Aufnahmeraum, in welchem das Formteil entweder direkt oder unter Zwischenschaltung einer dünnen Fluidschicht an Innenwänden des Aufnahmeelements anliegt. Hierdurch wird sichergestellt, dass sich das Formteil beim Einfüllen der pastösen Masse nicht verändert, sondern seine Ursprungsform (im ungefüllten Zustand) beibehält. Dies sorgt dafür, dass bei der Produktion von aus pastösen Massen hergestellten Objekten wie z. B. Lippenstiften, sehr viel geringere Fertigungstoleranzen auftreten als es bei den bekannten Verfahren der Fall ist. Hierbei ist es nicht notwendig, dass das Formteil vollflächig an der Aufnahmeelement anliegt, sondern dass die für die Maßhaltigkeit des Objekts wesentlichen Flächen an der Aufnahmeelement anliegen, wie z. B. die Mantelfläche bei einem Lippenstift.

Das Entleeren der Form geschieht nun dadurch, dass ein beweglicher Teil des Aufnahmeelements derart beweglich ausgebildet ist, dass bei dem Bewegen des beweglichen Teils der Aufnahmeraum zur Aufnahme des Formteils vergrößert wird. Auf diese Weise werden die Wände des Formteils definiert gedehtn und dabei von dem ausgehärteten pastösen Material wegbewegt Das ausgehärtete Objekt kann nun - bei der Lippenstifrherstellung z. B. mittels eines aufgesteckten Körbchens - aus dem Formteil entnommen werden. Der Vorteil, der durch den beweglichen Teil des Aufnahmeelements erzielt wird, besteht darin, dass der Aufnahmeraum nur um einen definierten Wert vergrößert wird, was auch nur eine definierte Verformung des Formteils mit sich bringt. Beim Entnehmen wird somit das Formteil nicht undefiniert gedehnt und eventuell überdehnt, was in einem Nachlassen der Formhaltigkeit der Form resultieren würde. Anstelle oder zusätzlich zur Bewegung des beweglichen Teils kann auch eine dünne Fluidschicht wie z. B. Wasser bzw. Ölschicht zwischen dem Formteil und dem Aufnahmeelement vorgesehen sein. Eine leichte definierte Vergrößerung des Formteils lässt sich dann erreichen, wenn das Fluid aus diesem Zwischenraum, z. B. mit der Bewegung des beweglichen Teils entfernt wird. Das Formteil wird hierbei leicht um einen kleinen definierten Betrag erweitert, der zwar eine Entnahme des gebildeten Objekts aus dem Formteil ermöglicht, andererseits jedoch eine Überdehnung des Formteils beim Entnehmen vermeidet. Als Fluid können hierbei alle Arten von flüssigen oder viskosen, jedoch fließfähigen Materialien verwendet werden. Wesentlich ist, dass das vorhandene Fluidvolumen abgeschlossen ist, so daß bei der Bewegung des beweglichen Teils von dem Formteil weg ein Vakuum auf die Wände des Formteils wirkt. Es ist natürlich in gleicher Weise möglich, den Aufnahmeraum durch das bewegliche Teil zu vergrößern und erst anschließend durch Anlegen eines Vakuums das Formteil zu dehnen.

Vorzugsweise ist die Außenwandung des Formteils in der Form eines Kegels ausgebildet, während der dazu korrespondierende bewegliche Teil des Aufnahmeelements in Form einer konusförmigen Vertiefung ausgebildet ist, die axial von dem Formteil hinwegbewegbar ist Das hierbei erzeugte Vakuum führt dazu, dass das Formteil leicht gedehnt wird. Da vorzugsweise ein Anschlag für die Bewegung des beweglichen Teils vorgesehen ist, ist der maximale Grad der Verformung des Formteils für die Entnahme des ausgehärteten Objekts festgelegt, bei verstellbaren Anschlägen sogar einstellbar. Der Anschlag kann so eingestellt werden, dass der beste Kompromiss zwischen leichter Entnahme und geringer Dehnung des Formteils gefunden wird.

Vorzugsweise besteht das Aufnahmeelement für das Formteil aus Metall und bildet mit diesem zusammen eine Form, die wie eine herkömmliche konventionelle Lippenstiftform in eine konventionelle Herstellungsmaschine, wie z.B. Rundtaktlippenstiftgießmaschine einsetzbar ist. Hierfür hat das Aufnahmeelement vorzugsweise in ihrem oberen und äußeren Bereich standardisierte Adapterflächen, z.B. in Form von Flanschen oder Auskragungen.

Vorzugsweise besteht die elastische Form aus Silikon. Sie kann jedoch auch aus beliebigen anderen elastischen Materialien wie verschiedenen Arten von Gummis und Kunststoffen hergestellt sein, die eine hohe Elastizität mit einer reversiblen Dehnung über 10% vorzugsweise über 30% aufweisen und gegenüber den herzustellenden Objekten chemisch unempfindlich sind.

Die Erfindung wird nachfolgend beispielsweise in der schematischen Zeichnung beschrieben. In dieser zeigen:
- Fig. 1a und b: eine Seitenansicht auf eine Form mit eingesetzter Form zur Herstellung eines Lippenstiftes in zwei um 90 ° versetzten Seitenansichten,
- Fig. 2: eine perspektivische Ansicht der Form aus Figur 1 schräg von oben, und
- Fig. 3: einen vergrößerten Schnitt der Form aus Figur 1 im Längsschnitt.

Die Figuren zeigen eine Form 10, wie sie beispielsweise in einem stationären oder mobilen Träger einer Lippenstiftfüllmeschine einsetzbar sind. Eine derartige (nicht abgebildete) Lippenstiftfüllmaschine, wie sie z. B. durch Rundtaktmaschinen repräsentiert wird, enthalten eine Füllvorrichtung, die eine warme flüssige pastöse Masse in eine Form füllt, die pastöse Masse härtet in der Form aus und eine Entnahmevorrichtung entnimmt den so gebildeten Lippenstift mittels eines von oben auf die erhärtete Masse aufgedrückten Körbchens, welches in der Regel das im Lippenstift verwendete Haltekörbchen ist. Beim Entnehmen des Lippenstiftes mittels des Körbchens wird das Formteil etwas geweitet, so dass der gebildete Lippenstift leicht freigegeben wird.

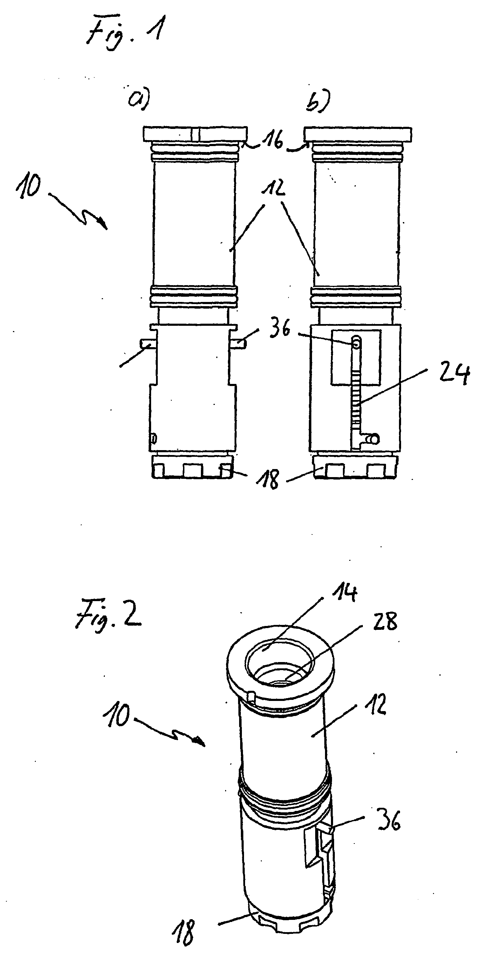

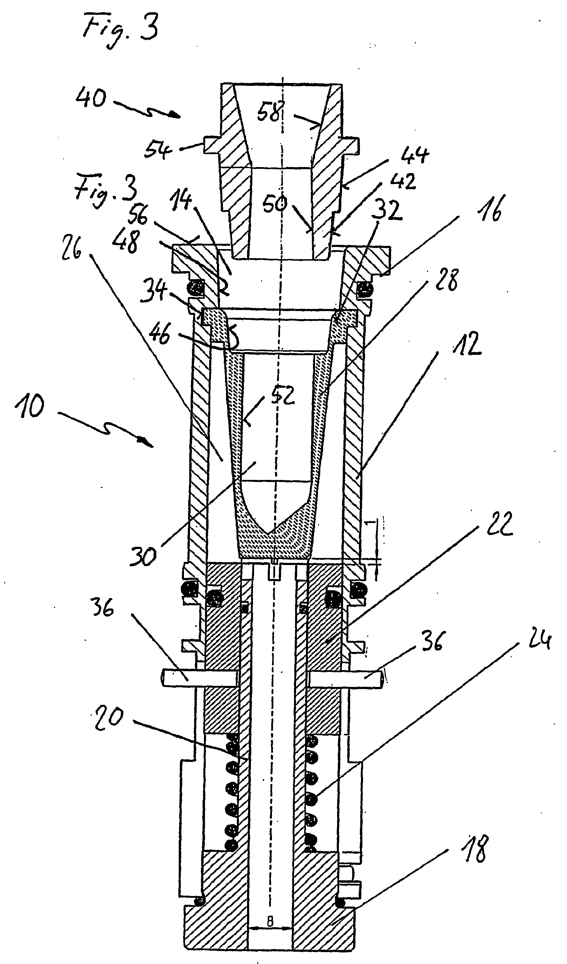

Eine derartige Form stellt die Form 10 dar, die in den Figuren 1 bis 3 gezeigt ist. Die Form 10 besteht aus einem äußeren hülsenförmigen stabilen Aufnahmeelement 12, das an seinem oberen Ende 14 eine Einfüllöffnung aufweist. Das obere Ende hat eine nach außen ragende Auskragung 16 zum Einsetzen der Form 10 in die Halterung einer Lippenstiftfüllmaschine. Das stabile Formteil besteht aus Metall, insbesondere Aluminium oder anderen Leichtmetall-Legierungen, und hat ein Bodenteil 18, von dem aus sich ein Zentrierdorn 20 senkrecht nach oben erstreckt. Auf diesem Dorn ist ein axial bewegliches Freigabeteil 22 gelagert, welches mittels einer Feder 24, die gegen den Bodenteil 18 des Formteils 12 abgestützt ist, in eine erste dargestellte Füllposition gedrückt wird. In dieser Füllposition liegt ein am oberen Ende des beweglichen Freigabeteils 22 angeordneter Innenkonus 26 flächig an der Außenwandung eines elastischen Formteils 28 an, welches vorzugsweise aus Silikon besteht und in dessen Innenraum 30 die pastöse Masse zur Bildung des Lippenstiftes eingefüllt wird. Das Formteil 28 ist mit einer Auskragung 32 in einer inneren Nut 34 des Aufnahmeelements 12 festgelegt Zum Bewegen des beweglichen Freigabeteils 22, 26 nach unten gegen die Kraft der Feder 24 ist ein quer zur Achse verlaufender Betätigungsbolzen 36 vorgesehen, der von einem nicht dargestellten Betätigungsorgan einer Lippenstiftherstellungsmaschine nach unten in eine Freigabeposition des oberen Konus betätigbar ist, wodurch das elastische Formteil 28 aufgrund des beim Runterfahren des Innenkonus entstehenden Unterdrucks gedehnt wird, was es wiederum erlaubt, die in dem Formteil 28 befindliche ausgehärtete Lippenstiftrnasse mittels eines Körbchens nach oben durch die Öffnung 14 aus der Form 10 zu entnehmen. Um ein reibungsloses Funktionieren zu gewährleisten, muss die Außenwandung des elastischen Formteils 28 nicht vollflächig am Innenkonus 26 anliegen. Es ist auch möglich, zwischen dem Innenkonus 26 und der Außenwand des Formteils 28 eine dünne Fluidschicht, z. B. Flüssigkeits schicht wie z. B. Wasser- oder Ölschicht anzuordnen, die bei einer Betätigung des Betätigungsbolzens 36 nach unten dazu führt, dass das elastische Förmteil 28 durch das Auftreten des Vakuums beim Herunterziehen des Innenkonus 26 in entsprechender Weise gedehnt wird. Dies wiederum führt zur Freigabe des in dem Innenraum 30 des Formteils 28 gebildeten Lippenstifts. Natürlich kann mit der Betätigung des Freigabeteils in die Freigabeposition auch ein Unterdruck an den Zwischenraum zwischen dem Formteil 28 und dem Aufnahmeelement 12 angelegt werden.

Zum Befüllen des Formstücks 18 ist ein Einfüllstück 40, insbesondere aus Metall vorgesehen, das auf das obere Ende 14 des Aufnahmeelements 12 aufsteckbar ist. Das Einfüllstück 40 ist in der Art eines Hohlzylinders ausgebildet, dessen Innenwand 50 am unteren Ende des Einfüllstücks 40 exakt den gleichen Durchmesser wie der Innendurchmesser 52 des zylindrischen Teils des Formstücks 18 aufweist. Der Innendurchmesser ist in einem oberen Abschnitt 58 leicht trichterförmig aufgeweitet. Das Formteil hat an seinem Außenumfang von unten nach oben zwei übereinander liegende konusförmige Umfangsflächen 42, 44. An dem oberen Rand der oberen konusförmigen Umfangsfläche 44 ist eine umlaufende Schulter 54 ausgebildet ist.

Dieses Einfüllstück 40 wird vor dem Befüllen auf das Aufnahmeelement aufgedrückt oder aufgesteckt, bis seine Schulter 54 auf der Oberseite 56 des Aufnahmeelements 12 anliegt. Hierbei liegen dann die äußeren Umfangsflächen 42,44 an einem entsprechenden Innenkonus 46 des Formteils 18 und an einem entsprechenden Innenkonus 48 des Aufnahmeelements 12 an und dichten somit den oberen Bereich der Form 10 zwischen Aufnahmeelement 12 und Formteil 18 sicher ab. Hierbei fluchtet die Innenwand 50 des Einfüllstücks 40 mit dem Innendurchmesser 52 des Formteils 18. Die Form 10 wird soweit gefüllt, bis die Masse etwas in das Einfüllstück 40 hineinsteht. Nach dem Aushärten der Masse wird das Einfüllstück 40 nun nach oben abgezogen, was dadurch erleichtert wird, dass die Innenwand 50 nach unten leicht konusförmig erweitert ist. Auf den nach oben aus dem Formteil herausragenden Massestift wird dann das Körbchen zum Entnehmen des Objekts aufgedrückt. Durch die Tatsache, dass der Umfang des Massebereichs zur Aufnahme in das Körbchen durch den genau definierten Innendurchmesser der Innenwand 50 des Einfüllstücks 40 definiert wird, werden durch das elastische Formteil keine Toleranzen in die Fertigung eingebracht.

Selbstverständlich muss die Betätigung des Betätigungsbolzens 36 nicht zentral durch die Lippenstiftmaschine gesteuert erfolgen, sondern kann auch allein durch die Entnahmevorrichtung mechanisch gekoppelt werden, z. B. in Koordination mit dem Aufsetzen des Körbchens auf die ausgehärtete Lippenstiftmasse.

Die formstabilen Teile des Aufnahmeelements, insbesondere der Innenkonus 26 besteht aus jedem beliebigen formstabilen Material wie z. B. Metall, Keramik oder Kunststoff, während das elastische Formteil aus jeder Art eines gummielastischen Materials mit einer elastischen Dehnbarkeit von wenigstens 10 % bestehen kann, insbesondere Silikon, Latex oder andere hochelastische Polymere.

Der Aufnahmeraum des Aufnahmeelements für das Formteil ist vorzugsweise im Innenraum des Aufnahmeelements vorgesehen. Das Aufnahmeelement kann wie in den Figuren als kreiszylindrischer Körper ausgebildet sein, in welchem z.B. der bewegliche Teil axial bewegbar ist. Es sind jedoch auch Köper mit anderen Formen, z.B. mit quadratischer oder polygoner Grundfläche vorstellbar.

Selbstverständlich kann zwischen dem Formteil 18 und der Kegelfläche bzw. Innenkonus 26 auch im entspannten Zustand über eine dünne Fluidschicht angeordnet sein, wodurch die Silikonform (Formteil 18) optimal stabilisiert werden kann.

## Patentansprüche

1. Vorrichtung zur Herstellung von aus pastösen Massen geformten Objekten, wie z. B. Lippenstiften, mit einem elastischen Formteil (28), in welchem die pastöse Masse mittels einer Füllvorrichtung eingefüllt, ausgehärtet und aus welcher das zumindest weitgehend ausgehärtete Objekt mit einer Entnahmevorrichtung unter elastischer Dehnung des Formteils entnommen wird,
wobei ein formstabiles Aufnahmeelement (12) zur Aufnahme des Formteils vorgesehen ist, welches Aufnahmeelement (12) in einem stationären oder beweglichen Träger der Vorrichtung gehalten ist, wobei das Formteil (28) in einem Aufnahmeraum des Aufnahmeelements angeordnet ist,
**dadurch gekennzeichnet, dass**
der Aufnahmeraum zum Entnehmen des Objekts durch Bewegen eines beweglichen, formstabilen Teils (26) des Aufnahmeelements (12) vergrößerbar ist.

2. Vorrichtung nach Anspruch 1, **dadurch gekennzeichnet, dass** während dem Füllvorgang zwischen dem Formteil und dem Aufnahmeelement eine dünne flüssige Fluidschicht angeordnet ist, welche für den Entnahmevorgang aus dem Aufnahmeelement entfernbar ist.

3. Vorrichtung nach Anspruch 1 oder 2, **dadurch gekennzeichnet, dass** die Fluidschicht eine Stärke von max. 5 mm, vorzugsweise maximal 2 mm aufweist.

4. Vorrichtung nach einem der vorhergehenden Ansprüche, **dadurch gekennzeichnet, dass** das Formteil (28) im Mantelbereich wenigstens überwiegend, vorzugsweise vollständig, flächig an dem Aufnahmeelement (12) anliegt.

5. Vorrichtung nach einem der vorhergehenden Ansprüche, **dadurch gekennzeichnet, dass** das Aufnahmeelement (12) ein relativ zum Formteil (28) bewegliches Freigabeteil (22, 26) umfasst.

6. Vorrichtung nach Anspruch 5,
**dadurch gekennzeichnet, dass** der Weg des beweglichen Freigabeteils (22, 26) in seinen Endpositionen durch Anschläge begrenzt ist.

7. Vorrichtung nach Anspruch 5 oder 6,
**dadurch gekennzeichnet, dass** zwischen dem Formteil (28) und dem beweglichen Freigabeteil (26) zur Bildung einer dünnen Fluidschicht ein abgeschlossenes Gas- bzw. Flüssigkeitsvolumen angeordnet ist.

8. Vorrichtung nach einem der Ansprüche 5 bis 7,
**dadurch gekennzeichnet, dass** ein Betätigungselement vorgesehen ist, welches gesteuert von einer Steuerung der Vorrichtung oder einer Entnahmevorrichtung während des Entnahmevorgangs das bewegliche Teil des Aufnahmeelements betätigt und/oder das Fluid aus dem Zwischenraum zwischen Formteil (28) und Aufnahmeelement (12) absaugt.

9. Vorrichtung nach einem der vorhergehenden Ansprüche,
**dadurch gekennzeichnet, dass** die dem Aufnahmeelement (26) zugewandte Seite des Formteils (28) die Form eines Kegels hat und dass das Aufnahmeelement (26) als dazu komplementäre konusförmige Ausnehmung als Innenkegel ausgebildet ist.

10. Vorrichtung nach einem der vorhergehenden Ansprüche,
**dadurch gekennzeichnet, dass** das Aufnahmeelement (12) aus Metall, insbesondere Aluminium hergestellt ist.

11. Vorrichtung nach einem der vorhergehenden Ansprüche,
**dadurch gekennzeichnet, dass** das Formteil (28) aus Silikon besteht.

12. Vorrichtung nach einem der vorhergehenden Ansprüche,
**dadurch gekennzeichnet, dass** das Formteil (28) an seinem oberen Einfüllende einen Kragen (32) aufweist, der in dem Aufnahmeelement (12) festgelegt ist.

13. Vorrichtung nach einem der vorhergehenden Ansprüche,
**dadurch gekennzeichnet, dass** das Aufnahmeelement (12) einen standardisierten Adapter (16) zur Aufnahme in einer herkömmlichen Rundtakt-Lippenstift-Gießmaschine aufweist.

14. Herstellungsform (10) für aus pastösen Massen geformte Objekte, wie z. B. Lippenstifte, insbesondere für eine Vorrichtung nach einem der vorhergehenden Ansprüche, umfassend
- ein elastisches Formteil (28) zur Aufnahme pastöser Masse,
- ein formstabiles Aufnahmeelement (12) zur Aufnahme des elastischen Formteils (28), welches Aufnahmeelement zur Aufnahme in einem stationären oder beweglichen Träger einer Herstellungsmaschine für aus pastösen Massen hergestellte Objekte ausgebildet ist,
wobei das Formteil (28) in einem Aufnahmeraum des Aufnahmeelements(12) angeordnet ist,
**dadurch gekennzeichnet, dass**
der Aufnahmeraum zum Entnehmen des Objektes durch Bewegen eines beweglichen, formstabilen Teils (26) des Aufnahmeelements (12) vergrößerbar ist.

15. Herstellungsform nach Anspruch 14, **dadurch gekennzeichnet, dass** während dem Füllvorgang zwischen dem Formteil (28) und dem Aufnahmeelement (26) eine dünne flüssige Fluidschicht angeordnet ist, welche für den Entnahmevorgang aus dem Zwischenraum zwischen Formteil und Aufnahmeelement entfernbar ist.

16. Herstellungsform nach Anspruch 14 oder 15, bei dem ein formstabiles hohlzylindrisches Einfüllstück (40), z. B. aus Metall, vorgesehen ist, welches auf das Aufnahmeelement (12) bzw. das Formteil (18) aufsetzbar ist und dessen Innenwand (50) die Form für einen Endbereich des Objekts bildet.

17. Verfahren zur Herstellung von aus pastösen Massen geformten Objekten, wie z. B. Lippenstiften, unter Verwendung eines elastischen Formteils (28), in welches die pastöse Masse eingefüllt, ausgehärtet, und das zumindest weitgehend ausgehärtete Objekt unter elastischer Dehnung des Formteils entnommen wird, wobei
- das Formteil während des Füll- und Entnahmevorgangs in einem Aufnahmeraum eines formstabilen Aufnahmeelements (12) angeordnet wird, um die Dehnung des Formteils zu verhindern/zu begrenzen, **dadurch gekennzeichnet, dass** zur Dehnung des Formteils während eines Entnahmevorgangs der Aufnahmeraum durch Bewegen eines beweglichen, formstabilen Teils (26) des Aufnahmeelements (12) vergrößert wird.

18. Verfahren nach Anspruch 17, **dadurch gekennzeichnet, dass** während dem Füllvorgang zwischen dem Formteil und dem Aufnahmeelement eine dünne flüssige Fluidschicht von max. 5 mm, vorzugsweise maximal 2 mm Stärke vorgesehen wird, welche Fluidschicht für den Entnahmevorgang aus dem Zwischenraum zur Erzeugung eines auf die Außenwand des Formteil wirkenden Vakuums entfernt wird.

19. Verfahren nach Anspruch 17 oder 18,
bei dem das Formteil (28) während des Füllvorgangs zumindest überwiegend an dem Aufnahmeelement (26) anliegt.

## Claims

1. Device for producing objects, for example lipsticks, that are molded from paste-like materials, with an elastic mold part (28), into which the paste-like material is introduced by means of a filling device, is hardened, and from which the at least largely hardened object is removed by a removing device while said mold part is elastically stretched,
wherein a dimensionally stable housing element (12) is provided for housing said mold part, wherein said housing element (12) is held inside a stationary or moveable support of said device, wherein said mold part (28) is placed in a housing space of said housing element
**characterized in that**
said housing space can be enlarged by moving a moveable, dimensionally stable part (26) of the housing element (12) for removing the object.

2. Device according to claim 1, **characterized in that** during the filling process a thin fluid layer is placed between said mold part and said housing element, which is removable from said housing element for the removal process.

3. Device according to claims 1 or 2, **characterized in that** said fluid layer has a thickness of at most 5 mm, preferably at most 2 mm.

4. Device according to any of the preceding claims, **characterized in that** a coat portion of said mold part (28) at least predominantly, preferably completely abuts in a planar fashion on said housing element (12).

5. Device according to any of the preceding claims, **characterized in that** said housing element (12) comprises a release element (22, 26) which is movable in relation to said mold (28).

6. Device according to claim 5,
**characterized in that** the path of said movable release element (22, 26) is in its end positions limited by block elements.

7. Device according to claims 5 or 6,
**characterized in that** between said mold part (28) and said movable release element (26) a closed gas volume or fluid volume, respectively, is arranged to form a thin liquid layer.

8. Device according to any of claims 5 to 7,
**characterized in that** an actuation element is provided which, controlled by a control element of said device or by a removing device, actuates the movable part of said housing element during the removal process and/or sucks said fluid off the gap between said mold part (28) and said housing element (12).

9. Device according to any of the preceding claims,
**characterized in that** the side of said mold part (28) which faces said housing element (26) has the shape of a cone, and that said housing element (26) is formed as complementary cone-shaped recess as inner cone.

10. Device according to any of the preceding claims,
**characterized in that** said housing element (12) is made of metal, in particular of aluminum.

11. Device according to any of the preceding claims,
**characterized in that** said mold part (28) is made of silicone.

12. Device according to any of the preceding claims,
**characterized in that** said mold part (28) comprises a flange (32) at its upper filling end, which is fixed in said housing element (12).

13. Device according to any of the preceding claims,
**characterized in that** said housing element (12) comprises a standardized adapter (16) to be housed in a traditional revolving-cycle lipstick pouring machine.

14. Production mold (10) for producing objects, for example lipsticks, that are molded from paste-like materials, in particular for a device according to any of the preceding claims, comprising
- an elastic mold part (28) for housing the paste-like material,
- a dimensionally stable housing element (12) for housing the elastic mold part (28), wherein said housing element is formed to be housed inside a stationary or moveable support of a production machine for objects made of paste-like materials,
- wherein said mold part (28) is placed in a housing space of said housing element (12),
**characterized in that**
said housing space can be enlarged by moving a moveable, dimensionally stable part (26) of the housing element (12) for removing the object.

15. Production mold according to claim 14, wherein during the filling process a thin fluid layer is placed between said mold part (28) and said housing element (26), which is removable from the gap between said mold part and said housing element for the removal process.

16. Production mold according to claims 14 or 15, wherein a dimensionally stable, hollow-cylindrical filling element (40), for example made of metal, is provided, which can be placed onto said housing element (12), respectively onto said mold part (18), and the inner wall (50) of which forms the mold for an end section of said object.

17. Method for producing objects, for example lipsticks, that are molded from paste-like materials, while using an elastic mold part (28), into which the paste-like material is introduced, hardened, and from which the at least largely hardened object is removed while said mold part is elastically stretched, wherein said mold part (28) is placed in a housing space of a dimensionally stable housing element (12) during the filling and removal process in order to prevent/limit the stretching of said mold part,
**characterized in that**
for stretching said mold part during the removal process said housing space is enlarged by moving a moveable, dimensionally stable part (26) of the housing element (12).

18. Method according to claim 17, wherein during the filling process a thin fluid layer is provided between said mold part and said housing element, having a maximum thickness of 5 mm, preferably of maximally 2 mm, said fluid layer is removed from the gap for the removal process in order to generate a vacuum acting upon the external wall of said mold part.

19. Method according to claims 17 or 18,
wherein said mold part (28) at least predominantly abuts the housing element (26) during the filling process.

## Revendications

1. Dispositif pour la fabrication d'objets moulés en matières payeuses, comme par exemple de bâtons à lèvres, comprenant une partie de moule élastique (28) dans laquelle la matière pâteuse est introduite au moyen d'un dispositif de remplissage et durcie et de laquelle l'objet au moins en grande partie durci est extrait par un dispositif d'extraction moyennant une expansion élastique de la partie de moule, un élément récepteur dimensionnellement stable (12) maintenu dans un support fixe ou mobile du dispositif étant prévu pour recevoir la partie de moule, la partie de moule (28) étant disposée dans un espace récepteur de l'élément récepteur, **caractérisé en ce que**, pour extraire l'objet, l'espace récepteur peut être agrandi par déplacement d'une partie mobile et dimensionnellement stable (26) de l'élément récepteur (12).

2. Dispositif selon la revendication 1, **caractérisé en ce qu'**une mince couche de fluide liquide, laquelle peut être éliminée de l'élément récepteur pour l'opération d'extraction, est disposée entre la partie de moule et l'élément récepteur durant l'opération de remplissage.

3. Dispositif selon la revendication 1 ou 2, **caractérisé en ce que** la couche de fluide possède une épaisseur de 5 mm maximum, de préférence de 2 mm maximum.

4. Dispositif selon une des revendications précédentes, **caractérisé en ce que**, dans sa zone périphérique, la partie de moule (28) est, au moins ex majeure partie, de préférence en totalité, en contact intime avec l'élément récepteur (12).

5. Dispositif selon une des revendications précédentes, **caractérisé en ce que** l'élément récepteur (12) comprend une partie de libération (22, 26) mobile par rapport à la partie de moule (28).

6. Dispositif selon la revendication 5, **caractérisé en ce que** la course de la partie de libération mobile (22, 26) est limitée par des butées au niveau de ses positions extrêmes.

7. Dispositif selon la revendication 5 ou 6, **caractérisé en ce qu'**un volume clos à gaz, respectivement à liquide est disposé entre la partie de moule (28) et la partie de libération mobile (26) pour former une mince couche de fluide.

8. Dispositif selon une des revendications 5 à 7, **caractérisé en ce qu'**il est prévu un élément d'actionnement qui, en étant commandé par un moyen de commande du dispositif ou d'un dispositif d'extraction durant l'opération d'extraction, actionne la partie mobile de l'élément récepteur et/ou aspire le fluide hors de l'intervalle compris entre la partie de moule (28) et l'élément récepteur (12).

9. Dispositif selon une des revendications précédentes, **caractérisé en ce que** le côté de la partie de moule (28) tourné vers l'élément récepteur (26) a la forme d'un cône et **en ce que** l'élément récepteur (26) est conçu sous la forme d'un cône femelle constitué par un évidement à conicité complémentaire.

10. Dispositif selon une des revendications précédentes, **caractérisé en ce que** l'élément récepteur (12) est réalisé en métal, en particulier en aluminium.

11. Dispositif selon une des revendications précédentes, **caractérisé en ce que** la partie de moule (28) est en silicone.

12. Dispositif selon une des revendications précédentes, **caractérisé en ce qu'**à son extrémité supérieure de remplissage la partie de moule (28) comporte un collet (32) qui est immobilisé dans l'élément récepteur (12).

13. Dispositif selon une des revendications précédentes, **caractérisé en ce que** l'élément récepteur (12) comporte un adaptateur normalisé (16) apte à être reçu dans une machine classique à transfert rotatif de moulage de bâtons à lèvres.

14. Moule de fabrication (10) pour des objets moulés en matières pâteuses, comme par exemple des bâtons à lèvres, en particulier pour un dispositif selon une des revendications précédentes, comprenant une partie de moule élastique (28) pour recevoir une matière pâteuse, et un élément récepteur dimensionnellement stable (12) pour recevoir la partie de moule élastique (28), ledit élément récepteur étant conçu pour être reçu dans un support fixe ou mobile d'une machine à fabriquer des objets en matières pâteuses, la partie de moule (28) étant disposée dans un espace récepteur de l'élément récepteur (12), **caractérisé en ce que**, pour extraire l'objet, l'espace récepteur peut être agrandi par déplacement d'une partie mobile et dimensionnellement stable (26) de l'élément récepteur (12) .

15. Moule de fabrication selon la revendication 14, **caractérisé en ce qu'**une mince couche de fluide liquide, laquelle peut être éliminée de l'intervalle entre la partie de moule et l'élément récepteur pour l'opération d'extraction, est disposée entre la partie de moule (28) et l'élément récepteur (26) durant l'opération de remplissage.

16. Moule de fabrication selon la revendication 14 ou 15, dans lequel est prévue une pièce de remplissage dimensionnellement stable en forme de cylindre creux (40), par exemple en métal, qui peut être posée sur l'élément récepteur (12), respectivement sur la partie de moule (18), et dont la paroi intérieure (50) constitue le moule pour une zone extrême de l'objet.

17. Procédé de fabrication d'objets moulés en matières pâteuses, comme par exemple de bâtons à lèvres, par l'emploi d'une partie de moule élastique (28) dans laquelle la matière pâteuse est introduite et durcie et de laquelle l'objet au moins en grande partie durci est extrait moyennant une expansion élastique de la partie de moule, la partie de moule étant disposée dans un espace récepteur d'un élément récepteur dimensionnellement stable (12) durant les opérations de remplissage et d'extraction afin d'empêcher/de limiter l'expansion de la partie de moule, **caractérisé en ce que**, pour expanser la partie de moule durant l'opération d'extraction, l'espace récepteur est agrandi par déplacement d'une partie mobile et dimensionnellement stable (26) de l'élément récepteur (12).

18. Procédé selon la revendication 17, **caractérisé en ce qu'**une mince couche de fluide liquide de 5 mm maximum, de préférence de 2 mm maximum d'épaisseur, laquelle peut être éliminée de l'intervalle pour créer un vide agissant sur la paroi exterieure de la partie de moule pour l'opération d'extraction, est prévue entre la partie de moule et l'élément récepteur durant l'opération de remplissage.

19. Procédé selon la revendication 17 ou 18, dans lequel, durant l'opération de remplissage, la partie de moule (28) est au moins en majeure partie en contact avec l'élément récepteur (26).
